## Europäisches Patentamt
## European Patent Office
## Office européen des brevets

(19)

(11) Veröffentlichungsnummer: **0 155 688**
**A2**

(12) # EUROPÄISCHE PATENTANMELDUNG

(21) Anmeldenummer: 85103285.4

(22) Anmeldetag: 21.03.85

(51) Int. Cl.⁴: **A 01 C 7/04**

(30) Priorität: 23.03.84 US 592898

(43) Veröffentlichungstag der Anmeldung:
25.09.85 Patentblatt 85/39

(84) Benannte Vertragsstaaten:
DE FR GB

(71) Anmelder: DEERE & COMPANY
1 John Deere Road
Moline Illinois 61265(US)

(72) Erfinder: Lundie, William Robert
3645 - 8th Street
East Moline Illinois 61244(US)

(72) Erfinder: Olson, Jay Harold
1716 - 29th Street
Rock Island Illinois 61201(US)

(74) Vertreter: Sartorius, Peter et al,
DEERE & COMPANY European Office, Patent
Department Postfach 503 Steubenstrasse 36-42
D-6800 Mannheim 1(DE)

(54) Sämaschine.

(57) Eine pneumatische Einzelkornsämaschine ist mit einem Zellenrad (70) ausgerüstet, auf dessen Oberfläche zahlreiche einen gleichmäßigen Abstand untereinander aufweisende, tropfenformartige Saatgutzellen (80) angeordnet sind, denen jeweils eine allmählich ansteigende Erhebung (96) zugeordnet ist, die im Bereich des vorderen Endes der Saatgutzelle (80) endet und die Rückwand (94) der Saatgutzelle oberhalb der Oberfläche (100) des Zellenrades derart verlängert, daß das einzelne Saatgut auch dann nicht aus der Saatgutzelle herausrutschen kann, wenn das spezifische Gewicht des Saatkornes und der in der Saatgutzelle erzeugte Unterdruck zu gering sind.

Fig. 4

Fig. 10

EP 0 155 688 A2

### Sämaschine

Die Erfindung bezieht sich auf eine Sämaschine, insbesondere pneumatische Einzelkornsämaschine, mit einem Zellenrad, in dessen Oberfläche zahlreiche mit Abstand zueinander angeordnete Saatgutzellen angeordnet sind, die auf einem Kreis angeordnet sind und die mit sich durch das Zellenrad erstreckenden Öffnungen versehen sind.

Es ist bereits eine Sämaschine der eingangs aufgeführten Art bekannt (US-A-4 047 638), die als pneumatische Einzelkornsämaschine ausgebildet ist und ein Zellenrad aufweist, in dessen Oberfläche zahlreiche Saatgutzellen mit Abstand zueinander angeordnet sind, die jeweils derart ausgebildet sind, daß ein einzelnes Saatkorn in den Zellen aufgenommen werden kann. Die einzelnen Saatgutzellen sind mit jeweils einer Öffnung versehen, die sich durch das Zellenrad erstrecken und die mit einer Unterdruckkammer in Verbindung stehen, so daß das Saatgut aufgrund des in der Saatgutzelle auftretenden Unterdruckes festgehalten werden kann. Bei relativ schmalen bzw. langen und ein geringes spezifisches Gewicht aufweisenden Saatkörnern besteht leicht die Gefahr, daß bei Bewegung des Zellenrades durch die Saatgutmasse die einzelnen Saatkörner aus den Zellen wieder herausbewegt werden, insbesondere dann, wenn sie nicht genau flach in die Saatzelle abgelegt werden.

Demgegenüber liegt der Erfindung die Aufgabe zugrunde, die Saatgutzellen zur Aufnahme eines einzelnen Saatkornes derart auszubilden und anzuordnen, daß die Saatkörner nicht aus den Saatgutzellen herausbewegt werden, wenn sich das Zellenrad durch die Saatgutmasse bewegt. Diese Aufgabe ist dadurch gelöst worden, daß auf der Oberfläche, auf der die Saatgutzellen angeordnet sind, zahlreiche sich nach außen erstreckende Erhebungen auf einer Kreisbahn angeordnet sind, wobei eine jede Erhebung sich bis in den Bereich einer Kante oder einer äußeren Begrenzung der Saatgutzelle erstreckt.

Durch die vorteilhafte Zuordnung einer Erhebung auf der Oberfläche des Zellenrades, die sich bis in den äußeren Bereich des einen Endes der Saatgutzelle erstreckt, wird eine zusätzliche Abstützung des einzelnen Saatkornes gewährleistet, wenn sich das Zellenrad durch den Saatgutbehälter bewegt und dabei die einzelnen Saatgutzellen mit Saatkörnern füllt. Die der Saatgutzelle zugeordnete Erhebung stützt auch dann das einzelne Saatkorn ab, wenn dieses nicht genau flach in die Saatgutzelle abgelegt ist, sondern sich beispielsweise infolge des Reibungswiderstandes bei Bewegung des Zellenrades durch die Saatgutmasse aufrecht stellt. Durch die Kombination des in der Saatgutzelle erzeugten Unterdruckes und durch die zusätzliche Erhebung, die der Saatgutzelle zugeordnet ist, wird auch dann das einzelne Saatkorn in der Saatgutzelle gehalten, wenn dieses relativ flach ausgebildet ist. Hierzu ist es vorteilhaft, daß eine jede Saatgutzelle eine Rückwand aufweist, die ebenfalls auf der Kreisbahn liegt, wobei eine jede Erhebung einen Teil aufweist, der die Rückwand über die Oberfläche des Zellenrades hinaus verlängert. Durch die vorteilhafte Verlängerung der Rückwand der Saatgutzelle mittels der der Saatgutzelle zugeordneten Erhebung wird eine relativ große Rückwand geschaffen, die das einzelne Saatkorn, beispielsweise einen Sonnenblumenkern, in der Saatgutzelle hält bzw. dieses einfacher in der Saatgutzelle aufnimmt, auch dann, wenn der Vakuumdruck infolge des geringeren spezifischen Gewichtes reduziert ist. Die Herabsetzung des Vakuumdruckes ist auch deshalb bei Saatkörnern mit geringem spezifischem Gewicht notwendig, um nicht mehr als ein Saatkorn in der Saatgutzelle zu halten.

In weiterer Ausgestaltung der Erfindung ist es vorteilhaft, daß die Kreisbahn einen Kreismittelpunkt aufweist, der koaxial zur Drehachse des Zellenrades verläuft, und die Rückwand der Saatgutzelle die durch das Zellenrad sich erstreckende Öffnung innerhalb der Saatgutzelle kreisförmig umgibt und daß die auf der Oberfläche des Zellenrades vorgesehene Erhebung als Rampe ausgebildet ist, die ab der höchsten durch die hervorstehende obere Kante der Innenseite der Saatgutzelle gebildeten Stelle allmählich abnimmt und kontinuierlich in die Oberfläche des Zellenrades übergeht. Da die als Rampe ausgebildete Erhebung vor der Saatgutzelle ihre höchste Stelle hat und von diesem Punkt allmählich abnimmt, kann der Reibungswiderstand bei Bewegung des Zellenrades durch die Saatgutmasse klein gehalten werden. Ferner wird durch die Rampe sichergestellt, daß das einzelne Saatkorn sicher in die einzelne Saatgutzelle hineingleitet. Dabei ist es vorteilhaft, daß die Rampe, die Saatgutzellen sowie die in den Saatgutzellen vorgesehenen Bohrungen bzw. Öffnungen auf der Kreisbahn angeordnet sind, die konzentrisch zur Drehachse des Zellenrades verläuft. Außerdem ist es vorteilhaft, daß die Rampe mit Bezug auf die Oberfläche des Zellenrades mit Bezug auf den Längsschnitt der Rampe konkav ausgebildet ist. Durch die konkav ausgebildete Rampe erhält man einen guten Übergang zwischen der höchsten Stelle der Rampe und der Oberfläche des Zellenrades.

In weiterer Ausgestaltung der Erfindung ist es vorteilhaft, daß eine jede Rampe eine innenliegende Kante oder Seite, die auf einem Teil der Kreisbahn verläuft, und eine außenliegende Kante oder Seite aufweist, die ebenfalls auf einem Teil der Kreisbahn verläuft, wobei die außenliegende Kante oder Seite mit Bezug auf die Oberfläche des Zellenrades geneigt verläuft, wobei die seitliche Ausdehnung der Rampe in etwa der seitlichen Ausdehnung der Saatgutzelle entsprechen kann, und daß neben den zahlreichen auf der ersten Kreisbahn angeordneten Rampen auf einer zweiten koaxial zur Drehachse des Zellenrades ausgerichteten Kreisbahn ebenfalls zahlreiche Erhebungen vorgesehen sind, die untereinander einen Abstand aufweisen. Durch die vorteilhafte Ausbildung der Rampe, die in etwa so breit ist wie die breiteste Stelle der Saatgutzelle, wird der Reibungswiderstand des gesamten Zellenrades insgesamt sehr klein gehalten, wobei gleichzeitig sichergestellt wird, daß das einzelne Saatgut ohne weiteres in die Saatgutzelle hineingeschoben wird. Neben den den Saatgutzellen zugeordneten Erhebungen bzw. einzelnen Rampen können weitere Erhebungen vorgesehen sein, die eine zusätzliche Bewegung des Saatgutes herbeiführen und das Saatgut dahingehend unterstützen, daß es den Saatgutzellen leichter zugeführt wird. Gleichzeitig können sie auch dazu dienen, das an der Innenseite des Gehäuses des Säorganes haftende Erntegut abzukratzen und entsprechend weiterzufördern. Dabei ist der Abstand in vorteilhafter Weise so gewählt, daß sich die einzelnen Saatkörner nicht zwischen den Erhebungen festklemmen. Vorteilhaft ist es ferner, daß die einzelnen Erhebungen mit Bezug auf den Mittelpunkt radial ausgerichtet sind und mittels einer innenliegenden und einer außenliegenden auf einer Kreisbahn verlaufenden Seite bzw. Kante begrenzt werden, wobei die außenliegende Seite mit Bezug auf die Oberfläche des Zellenrades geneigt verläuft, und daß die Rampe mit ihrem einen oberhalb der Oberfläche des Zellenrades liegenden Ende einen Teil der Rückwand der Saatgutzelle bildet, wobei die innenliegende Kante der Rückwand relativ dünn bzw. scharfkantig ausgebildet ist. Da die Rampe bzw. das vordere Ende Teil der Rückwand der Saatgutzelle ist und die innenliegende Kante relativ dünn ausgebildet ist, wird eine einwandfreie Trennung der dicht nebeneinander liegenden Saatkörner gewährleistet und somit sichergestellt, daß das Saatkorn ohne weiteres in der Saatgutzelle aufgenommen wird. Ferner wird dadurch vermieden, daß mehrere Saatkörner in einer einzelnen Zelle zurückgehalten werden.

Da die Saatgutzelle tropfenförmig ausgebildet ist und der im Querschnitt schmalere Teil der Saatgutzelle etwas radial nach außen gerichtet ist und mit Bezug auf die Oberfläche des Zellenrades geneigt verläuft, während die Rückwand in etwa rechtwinklig zur Oberfläche des Zellenrades verläuft, lassen sich insbesondere relativ flache Saatkörner, beispielsweise Sonnenblumenkerne, ohne weiteres in der Saatgutzelle aufnehmen und nach Erreichen des Saatgutaustragbereiches das einzelne Saatkorn in Richtung dieses Saatgutaustragbereiches abgeben und dann über das Austragrohr auf dem Boden ablegen. Hierzu ist es vorteilhaft, daß die durch die Saatgutzelle verlaufende Längsmittelachse tangential an die äußere Kreisbahn herangeführt ist und mit der Kreisbahn einen spitzen Winkel einschließt.

Da die Saatgutzelle im Bereich der tiefsten Stelle der Saatgutzelle eine kreisbogenförmige Rückwand aufweist, die in die kreisförmige Rückwand der Rampe übergeht, wobei die Gesamthöhe der Rückwand größer ist als die Tiefe der Saatgutzelle, wird gewährleistet, daß beispielsweise tropfenförmig ausgebildete Saatkörner einwandfrei in die Saatgutzelle abgelegt werden können, so daß das Saatgut nicht über die Oberfläche des Zellenrades hinausragt und dadurch sichergestellt wird, daß es bei Bewegung des Zellenrades nicht wieder aus der Saatgutzelle herausgedrückt wird. Hierzu ist es vorteilhaft, daß die höchste Stelle der Rampe auf der gleichen Höhe wie die Rückwand der Saatgutzelle liegt und daß die Rampe von dieser Stelle aus allmählich abnimmt, bis sie in die Oberfläche des Zellenrades ausläuft, und daß die seitlichen Begrenzungen der Rampen auf dem gleichen Kreisumfang wie die seitliche Begrenzung der Saatgutzelle liegen.

Im folgenden wird die Erfindung anhand von lediglich einen Ausführungsweg darstellenden Zeichnungen näher erläutert. Es zeigt:

Fig. 1   eine perspektivische Darstellung einer Dosierungsvorrichtung einer Einzelkornsämaschine in auseinandergezogener Darstellung,

Fig. 2   die Seitenansicht des Säorganes mit dem zugehörigen Zellenrad zur Aufnahme einzelner Saatgutkörner aus dem Saatgutbehälter,

Fig. 3    ein einzelnes Saatgut, beispielsweise einer
         Sonnenblume, das lang und schmal ausgebildet
         ist,

Fig. 4    eine Draufsicht des Zellenrades,

Fig. 5    einen Schnitt entlang der Linie 5 - 5 gemäß
         Fig. 4,

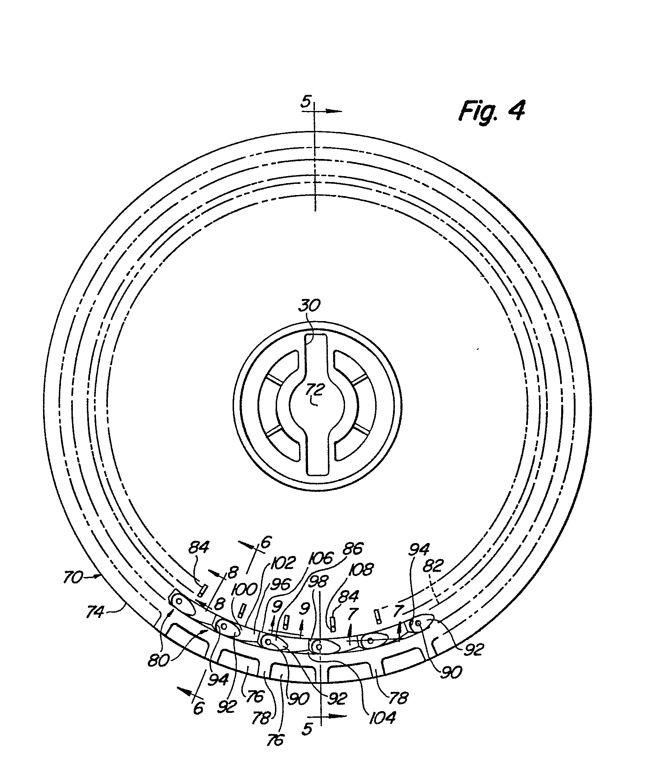

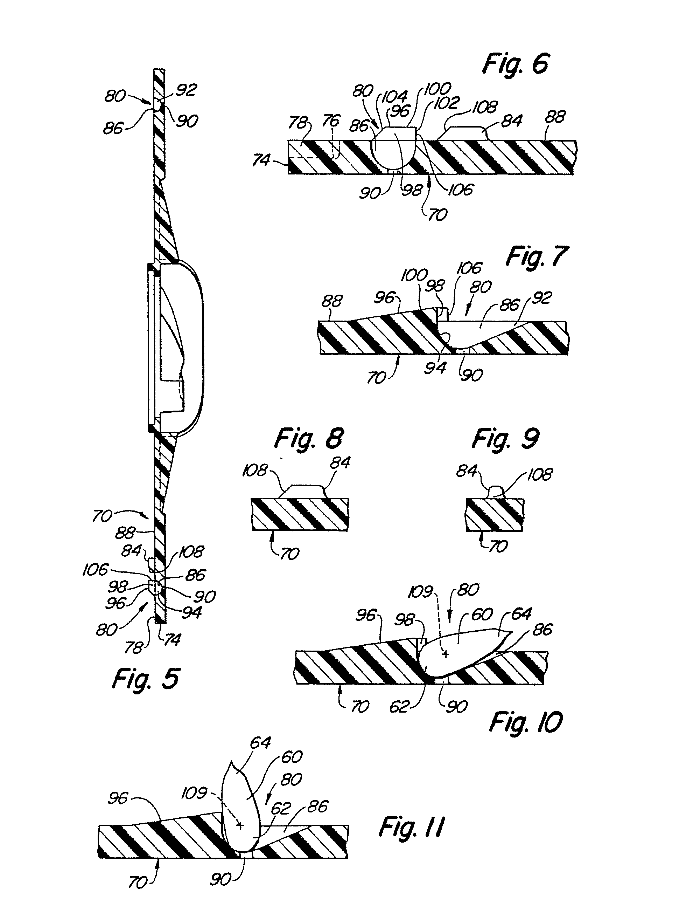

Fig. 6    einen Längsschnitt entlang der Linie 6 - 6
         gemäß Fig. 4,

Fig. 7    einen Schnitt entlang der Linie 7 - 7 gemäß
         Fig. 4, wobei eine einzelne Saatgutzelle
         dargestellt ist,

Fig. 8    einen Schnitt durch den Teil eines Zellenrades entlang der Linie 8 - 8 gemäß Fig. 4,

Fig. 9    einen Schnitt entlang der Linie 9 - 9 gemäß
         Fig. 4 mit der zugehörigen Erhebung gemäß
         Fig. 6,

Fig. 10   einen Längsschnitt durch die Saatgutzelle
         mit dem zugehörigen Saatkorn,

Fig. 11   eine Schnittdarstellung ähnlich wie in

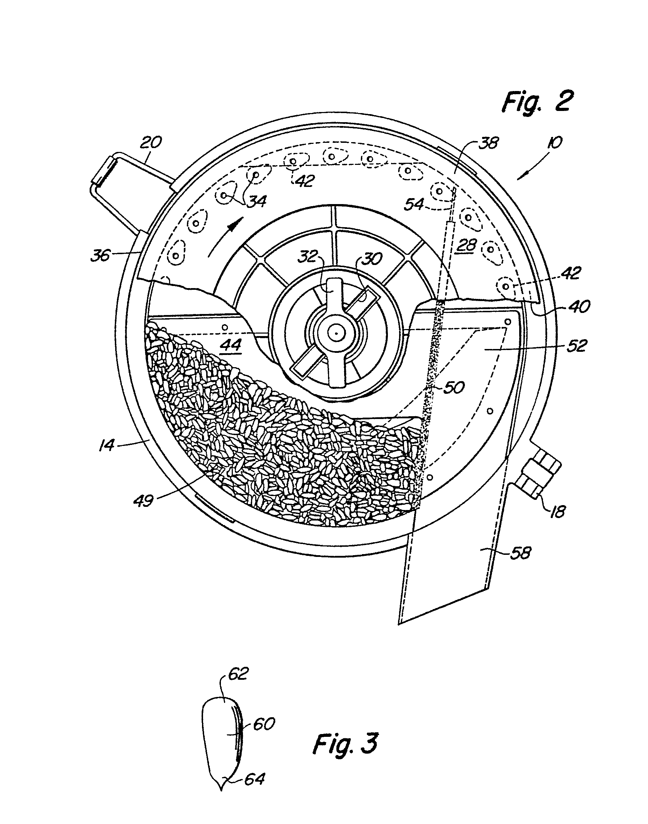

         Fig. 7, wobei das in Fig. 3 dargestellte
         Saatgut eine andere Stellung eingenommen
         hat.

In der Zeichnung ist mit 10 ein Säorgan einer Vakuumsämaschine bezeichnet, zu der ein zylindrisches Gehäuse 12 gehört, das aus einer ersten Gehäusehälfte 14 und einer gegenüberliegenden zweiten, dieser angepaßten Gehäusehälfte 16 besteht. Die zweite Gehäusehälfte 16 ist mit der ersten Gehäusehälfte 14 über ein Gelenk 18 verbunden, so daß die bei-

0155688

den Gehäusehälften 14 und 16 durch Heranschwenken der Gehäusehälfte 16 an die Gehäusehälfte 14 zu einem Gehäuse zusammengefügt werden können. Gegenüber dem Gelenk 18 befindet sich eine Klammer 20, die die beiden Gehäusehälften 14 und 16 zusammenhält.

Mittig in der ersten Gehäusehälfte 14 lagert drehbar eine Nabe 22, und zwar in einer in der Zeichnung nicht dargestellten Buchse. Das Säorgan 10 weist ein Zellenrad 28 auf, das in seinem Zentrum mit einer Langlochöffnung 30 versehen ist. Das Zellenrad 28 ist mittels der Nabe 22 drehbar gelagert und weist ein entsprechendes Arretierungselement 32 auf, das auf der Nabe 22 angeordnet ist und das durch die Langlochöffnung 30 eingeführt wird, um das Zellenrad 28 in der Nabe 22 zu lagern. Das Arretierungselement 32 wird dann so weit gedreht, bis das Zellenrad 28 mit der Nabe 22 fest verbunden ist.

Das Zellenrad 28 weist auf seinem Kreisumfang zahlreiche Löcher 34 auf, die im Bereich des Außenumfanges an der Innenseite des Zellenrades 28 kreisförmig angeordnet sind. Eine jede in der Oberfläche des Zellenrades 28 vorgesehene Vertiefung 34 liegt zwischen der äußeren Seite 38 und der inneren Seite 40 des Zellenrades 28. Wie aus den gestrichelten Linien gemäß Fig. 2 hervorgeht, weist das Zellenrad 28 auf seiner ersten Seite 40 die Vertiefung 34 auf, die die Saatgutzelle 42 bildet.

Das Zellenrad 28 ist auf der Nabe 22 angeordnet, und die zweite Gehäusehälfte 16 wird zur Schließung des Gehäuses 12 auf die erste Gehäusehälfte 14 aufgeschoben, so daß das Zellenrad 28 den Hohlraum innerhalb des zylindrischen Gehäuses 12 in eine erste Saatgutkammer 44 aufteilt, die zwischen dem Zellenrad 28 und der ersten Gehäusehälfte 14 liegt. Eine zweite Saatgutkammer oder Vakuumkammer 46 befindet sich zwischen dem Zellenrad 28 und der zweiten Gehäusehälfte 16. Die Vakuumkammer weist eine Vakuumöffnung 47 auf, die sich in der zweiten Gehäusehälfte 16 befindet, so
daß innerhalb der zweiten Saatgutkammer bzw. Vakuumkammer 46
im Bereich der zweiten Seite 38 des Zellenrades 28 ein Unterdruck erzeugt werden kann. Der Unterdruck bzw. das Vakuum steht in Wirkverbindung mit der ersten Seite 40 des
Zellenrades 28, und zwar über die Vertiefungen 34.

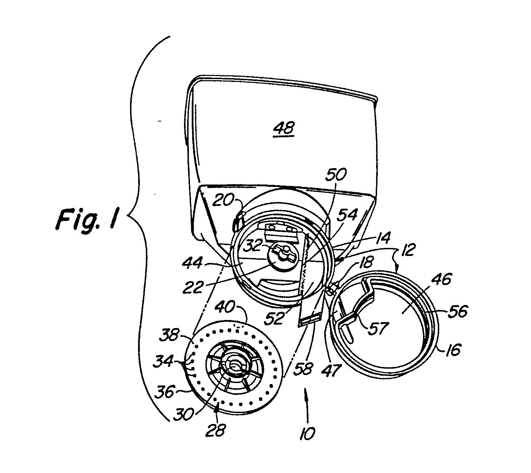

Wie aus Fig. 1 hervorgeht, ist die erste Gehäusehälfte 14
des zylindrischen Gehäuses 12 im unteren Bereich eines Saatgutbehälters 48 angeordnet und dient zur Aufnahme des Saatgutes, das mittels des Säorganes 10 entsprechend dosiert
aufgenommen wird. Das Saatgut aus dem Saatgutbehälter 48
fließt in die Saatgutkammer 44 der ersten Gehäusehälfte 14,
so daß sich das Saatgut an der ersten Seite 40 des Zellenrades 28 ansammelt, das in Fig. 2 durch die Bezugszahl 49
angegeben ist. Wird die Nabe 22 entsprechend angetrieben,
so dreht sich auch das Zellenrad 28, und die Saatgutzellen
42, die an den Enden der Löcher 34 der ersten Seite 40 vorgesehen sind, bewegen das Saatgut derart, daß es aus der
Saatgutmasse der Saatgutkammer 44 heraustritt. Ein jedes
in der Saatgutzelle 42 aufgenommene Saatgut wird mittels
des Vakuumdruckes in der zweiten Saatgutkammer gehalten,
die mit der Vertiefung bzw. dem Loch 34 in Verbindung steht.
Das Vakuum hält das Saatgut in der Saatgutzelle 42, bis die
Saatgutzelle 42 ein Abstreifelement 50 passiert. Das Abstreifelement 50 erstreckt sich quer über die Innenseite
der ersten Gehäusehälfte 14 und bildet einen Saatgutaustragbereich, der von der Saatgutkammer 44 getrennt ist, und
die Saatgutmasse 49 wird durch das Abstreifelement 50 und
eine Trennwand 54, auf der das Abstreifelement 50 montiert
ist, gehalten. Wenn eine jede Vertiefung 34 in die Nähe des
Saatgutaustragbereiches 52 gelangt, so wird das Vakuum von
der Vakuumkammer 46 abgeschnitten. Dies ist aufgrund eines
Vakuumdichtelementes möglich, das an der Innenseite der zweiten Gehäusehälfte 16 vorgesehen ist und das mit der zweiten
Seite 38 des Zellenrades 28 in Kontakt steht. Ein Teil 57
des Vakuumdichtelementes 56 erstreckt sich von dem Kreisumfang der zweiten Gehäusehälfte 16 nach innen, um somit den Saatgutaustragbereich 52 von dem Vakuum zu isolieren. Wenn das Vakuum von dem Loch 34 abgeschnitten ist, so fällt das innerhalb der Saatgutzelle 42 aufgenommene Saatgut infolge der Schwerkraft aus der Saatgutzelle heraus. Das Saatgut fällt durch einen Auslauf 58, der am Boden der ersten Gehäusehälfte 14 vorgesehen ist, auf den Boden.

Die Vertiefung der Saatgutzelle 42 bewirkt eine entsprechende Bewegung der Saatgutmasse 49 in den meisten Fällen, wobei die Ausbildung der Saatgutzelle 42 in Verbindung mit den Vakuumkräften dazu beiträgt, daß das entsprechende einzelne Saatkorn in der Saatgutzelle 42 aufgenommen wird und durch die Saatgutmasse 49 in den Saatgutaustragbereich 52 transportiert wird. Entsprechende in der Zeichnung nicht dargestellte Erhebungen können auf der ersten Seite 40 des Zellenrades 28 im Bereich der Saatgutzellen 42 vorgesehen werden, um eine entsprechende Einwirkung auf die Saatgutmasse 49 zu erreichen, wenn dies wünschenswert ist.

Das Zellenrad 28 kann erfolgreich für Weizen, Baumwollsamen, Hirsesamen, Zuckerrübensamen und Sojabohnensamen verwendet werden. Jedoch bewirken gewisse Saatgutarten, beispielsweise Sonnenblumenkerne, für derartige Zellenräder Probleme. Dies hängt insbesondere von der Formgebung des Saatgutes ab, insbesondere von der länglichen Form des Samens, wie sie bei Sonnenblumenkernen auftritt. Der nachteilige Effekt derartiger Saatgutkörner wird auch insbesondere bei den Sonnenblumenkernen infolge der geringen Masse auftreten. In Fig. 3 ist ein typischer Sonnenblumenkern dargestellt. Aus dieser Figur geht hervor, daß das Saatkorn 60 zwischen seinen Saatgutenden 62 und 64 relativ lang und schlank ausgebildet ist. Das Ende 62 des Sonnenblumenkerns 60 ist normalerweise etwas breiter und flacher abgerundet als das gegenüberliegende Ende, das spitzförmig ausläuft. Insgesamt ist jedoch der Sonnenblumenkern relativ flach ausgebildet. Der Sonnenblumenkern 60 weist normalerweise eine relativ geringe Dichte bzw. ein geringes spezifisches Gewicht auf und somit eine geringe Masse im Vergleich zu anderen Saatkörnern.

Aufgrund der geringen Masse des Sonnenblumenkerns 60 muß das Loch bzw. die Vertiefung 34 der Saatgutzelle 42 relativ klein ausgebildet sein, um die Vakuumkräfte, die auf das Saatgutkorn innerhalb der Saatgutzelle 42 wirken, zu reduzieren. Sonst würden die Vakuumkräfte zwei oder mehr Sonnenblumenkerne in der Saatgutzelle 42 zurückhalten, was natürlich nicht erwünscht ist. Es ist nachher unbedingt notwendig, daß eine jede Saatgutzelle 42 nur ein Saatkorn und nicht mehrere Saatkörner aus der Saatgutmasse 49 in den Saatgutaustragbereich 52 fördert. Aufgrund der geringen Krafte, die von dem Vakuum ausgehen und auf die Saatgutzelle 42 einwirken, wird sichergestellt, daß lediglich nur ein Sonnenblumenkern 60 in der Saatgutzelle 42 zurückgehalten wird, wenn das Zellenrad 28 sich durch die Saatgutmasse 49 bewegt. Die Aufnahme nur eines einzelnen Saatkornes wird dadurch erschwert, daß beispielsweise der Sonnenblumenkern 60 relativ flach ausgebildet ist. Sind beispielsweise Saatgutkörner mehr tonnenförmig ausgebildet und weisen größere Abrundungen auf, so ist es leichter, diese in den Saatgutzellen 42 aufzunehmen, da diese einfacher in den Zellen plaziert werden können als die relativ flachen Sonnenblumenkerne 60. Die Sonnenblumenkerne 60 neigen nicht dazu, ohne weiteres in den Saatgutzellen 42 aufgenommen zu werden, wenn nicht eine erhebliche Saatgutbewegung bzw. Saatgutbeschleunigung innerhalb der Saatgutmasse 49 vorhanden ist. Solche Saatgutkörner, die dann in die Saatgutzellen 42 fallen, neigen dazu, wieder herauszufallen oder infolge des geringen Vakuumdruckes sich in den Saatgutzellen zu drehen oder aufzurichten.

Aufgrund der vorliegenden Erfindung ist das Zellenrad 28 in vorteilhafter Weise so ausgebildet, daß es auch insbesondere Sonnenblumenkerne aufnehmen kann oder solche Saatkörner, die eine ähnliche Formgebung und eine relativ geringe Masse aufweisen. Derartige Zellenräder sind in den Figuren 4 bis 9 veranschaulicht. Das Zellenrad 70 entspricht in etwa dem Zellenrad 28 gemäß Fig. 1 und 2, und zwar in den Abmessungen, in der Formgebung und in der Montage des Zellenrades 28 auf der Nabe 22 des Säorganes 10. Wie insbesondere aus Fig. 4 hervorgeht, ist der zentrale Teil des Zellenrades 70 mit einer Öffnung 30 versehen, um den Griff bzw. das Arretierungselement 32 gemäß Fig. 1 und 2 aufzunehmen, so daß das Zellenrad 70 auf der Nabe 22 ähnlich wie das Zellenrad 28 montiert werden kann. Das Zellenrad 70 unterscheidet sich von dem Zellenrad 28 in der Formgebung der Saatgutzellen und durch die zusätzliche Verwendung von zahlreichen kleinen Erhebungen in Verbindung mit den Saatgutzellen.

In Fig. 4 ist das Zellenrad 70 flach und relativ dünn ausgebildet und weist einen Mittelpunkt 72 auf, der der Drehachse des Zellenrades 70 entspricht. Das Zellenrad 70 weist einen äußeren kreisförmigen Rand 74 auf. Ferner sind im Bereich des äußeren Randes 74 zahlreiche Vertiefungen 76 vorgesehen, die durch Rippen 78 unterbrochen werden. Die Rippen 78 dienen dazu, beschädigtes Saatgut bzw. andere Rückstände innerhalb des zylindrischen Gehäuses 12 des Säorganes 10 weiterzubewegen.

Das Zellenrad 70 weist einen gleichen Abstand untereinander aufweisende Saatgutzellen 80 auf, die alle auf dem gleichen Radius angeordnet sind, der vom Mittelpunkt 72 des Zellenrades 70 ausgeht. Die auf einem gleichen Kreisbogen 82 angeordneten Saatgutzellen 80 liegen innerhalb des Randes 74 des Zellenrades 70. Die Zellenräder 70 weisen ferner auf einem Kreisradius zahlreiche nebeneinander angeordnete Erhebungen 84 auf, die innerhalb des Kreisbogens 82 der Saatgutzellen 80 liegen. Die einzelnen Erhebungen 84 liegen jeweils neben den Saatgutzellen 80. Eine jede Saatgutzelle 80 besteht aus einer Vertiefung 86, die in der Oberfläche 88 des Zellenrades 70 vorgesehen ist. Eine jede Vertiefung 86 ist länglich ausgebildet und weist in etwa die Form eines Tropfens auf, der mit seinem spitzen Ende zur Oberfläche 88 des Zellenrades 70 ausläuft. Eine jede Saatgutzelle 80 ist ferner mit einer Öffnung 90 versehen, die sich durch das Zellenrad 70 erstreckt und somit ermöglicht, daß der Unterdruck in der Vakuumkammer 46 auch einen Unterdruck in der Saatgutzelle 80 erzeugt. Die Öffnung 90 ist kleiner als die Vertiefung 34 der Saatgutzelle 42 des Zellenrades 28 gemäß Fig. 1, damit ein geringerer Vakuumdruck in der Vertiefung 86 erzeugt wird. Dies ist deshalb wünschenswert, um beispielsweise zu vermeiden, daß mehr als ein Sonnenblumenkern 60 in der Vertiefung 86 aufgenommen wird, da die Masse des Sonnenblumenkerns 60 relativ gering ist.

Aus Fig. 6 geht hervor, daß der Querschnitt an der Schnittstelle 6 - 6 der Vertiefung 86 gleichförmig ausgebildet ist und sich radial zum Mittelpunkt 72 des Zellenrades 70 erstreckt. Wie ferner aus Fig. 7 hervorgeht, ist eine jede Vertiefung im Längsquerschnitt asymmetrisch ausgebildet, wobei sich die Längsachse der Vertiefung in Richtung des Kreisbogens 82 der Saatgutzellen 80 erstreckt. Somit weist die Vertiefung 86 einen geneigt verlaufenden Boden auf, der an seinem spitzen Ende 92 (mit Bezug auf die Ansicht von oben) allmählich in die Oberfläche 88 übergeht. Die Rückwand 94 der Vertiefung 86 verläuft mit Bezug auf das Zellenrad 70 vertikal. Die Rückwand 94 bildet das eine Ende der Zelle, während das Ende 92 diesem Ende gegenüberliegt. Die Öffnung 90 befindet sich dicht neben der Rückwand 94, die die Oberfläche 88 beispielsweise in einem annähernd rechten Winkel schneidet. Somit weist die Öffnung 90 zur Rückwand 94 einen kleineren Abstand auf als zu dem Ende 92 der Vertiefung 86.

Eine jede Saatgutzelle 80 weist eine Rampe bzw. eine Erhebung 96 auf, die sich von der Oberfläche 88 des Zellenrades 70 in Richtung der Vertiefung 86 der Saatgutzelle 80 erstreckt. Die Rampe 96 liegt ebenfalls auf dem Kreisbogen 82 zwischen den einzelnen Vertiefungen 86, und das Auslaufende der Rampe 96 weist eine Innenseite 98 auf, die in die Rückwand 94 der Vertiefung 86 übergeht.

Ferner weist die Rampe 96 im Bereich der Innenseite 98 eine Oberfläche 100 auf, die die Innenseite 98 der Rampe 96 an der höchsten Stelle der Erhebung 96 in etwa rechtwinklig schneidet. Die Oberfläche 100 geht auf dem Kreisbogen 82 allmählich in die Oberfläche 88 des Zellenrades 70 über. Die Erhebung 96 weist, wie aus Fig. 6 hervorgeht, eine innere Kante 102 auf, die ebenfalls auf dem Kreisbogen 82 einerseits der Oberfläche 100 liegt. Die Oberfläche 100 wird ferner durch eine Kante 104 begrenzt, die ebenfalls auf dem Kreisbogen 82 liegt. Die äußere Kante 104 weist einen größeren radialen Abstand zum Mittelpunkt 72 auf als die innere Kante 102. Die äußere Kante 104 ist mit Bezug auf die Oberfläche 88 geneigt verlaufend angeordnet und schneidet somit die Oberfläche 100 in einem stumpfen Winkel.

Die Innenseite 98 der Rampe 96 erstreckt sich bis zur Oberfläche 100 der Rampe 96. Die Innenseite der Rampe 96 wird durch eine Kante 106 begrenzt. Die Kante 106 ist relativ scharf ausgebildet.

Die Rampe 96 einer jeden Saatgutzelle 80 dient in Verbindung mit der Vertiefung 86 und der Bohrung 90 dazu, einen einzelnen Sonnenblumenkern 60 aufzunehmen und in der Saatgutzelle festzuhalten. Die Innenseite 98 der Rampe 96, die dazu beiträgt, die Rückwand 94 entsprechend zu verlängern, verhindert, daß relativ langes, flaches Saatgut aus der Vertiefung 86 herausbewegt wird, wenn das einzelne Saatgut aus der Saatgutmasse 49 herausgepickt wird. Wie bereits ausgeführt, ist die Innenseite 98 der Rampe 96 konkav ausgebildet und ergänzt somit den Teil der Rückwand 94 der Vertiefung 86. Dies stellt sicher, daß das Saatkorn bzw. der Sonnenblumenkern 60 innerhalb der Saatgutzelle 80 verharrt, wenn beispielsweise die Saatgutzelle 80 ihre Lage verändert, wenn sie sich durch die Saatgutmasse 49 nach oben bewegt und dabei in den Saatgutaustragbereich 52 eintritt. Bewegt sich die Saatgutzelle 80 innerhalb der Saatgutmasse 49, so tritt es häufig auf, daß zwei oder mehr Sonnenblumenkerne 60 in der Vertiefung 86 und im Bereich der Innenseite 98 der Rampe aufgenommen bzw. festgehalten werden. Die Vertiefung ist hierzu nur geringfügig größer als das entsprechende Saatkorn. Dadurch wird gewährleistet, daß ein einzelnes Saatgut 60 letztlich in der Vertiefung 86 verharrt, während die anderen Saatkörner ausgeschieden werden. Dabei unterstützt die Innenseite 98 der Rampe 96, daß das einzelne Saatgut in der Vertiefung 86 verharrt, und verhindert ferner, daß es durch Drehen bzw. Torkeln sich aus der Vertiefung 86 herausbewegt. Gleichzeitig werden weitere Saatgutkörner von der Saatgutzelle 80 wegbewegt, wenn die Saatgutzelle 80 oberhalb der Saatgutmasse 49 bewegt wird. Die geneigt verlaufende Oberfläche 100 der Rampe 96 unterstützt ferner die Entfernung überflüssigen Saatgutes. Dieses überflüssige Saatgut gleitet dann an der Oberfläche 100 der Rampe 96 entlang. Dieser Vorgang wird durch die geneigt verlaufende Oberfläche der Rampe 96 in vorteilhafter Weise unterstützt, so daß die übrigen Saatkörner in der Saatgutmasse 49 verharren. Da die Oberfläche 100 keine scharfen Kanten aufweist, sondern relativ glatt und rund ausgebildet ist, können diese überschüssigen Saatgutkörner ohne weiteres an der Oberfläche 100 entlanggleiten und in der Saatgutmasse 49 verbleiben.

Wie bereits erwähnt, ist die Kante 104 der Rampe 96 geneigt verlaufend ausgebildet. Die innere Wand der ersten Gehäusehälfte 14 des zylindrischen Gehäuses 12 ist relativ dicht im Bereich des Randes 74 des Zellenrades 70 vorgesehen, und somit ist auch die äußere Kante bzw. der äußere Rand des Zellenrades 28 (siehe Fig. 1 und 2) im Bereich der äußeren Peripherie des zylindrischen Gehäuses 12 vorgesehen. Die geneigt verlaufende Kante 104 der Rampe 96 verhindert, daß Saatgut zwischen die Erhebung 96 und die innere Wand der ersten Gehäusehälfte 14 gelangt. Somit wird verhindert, daß Saatgut beschädigt wird oder auf andere Weise die Operation des Säorganes nachteilig stört.

Die Erhebungen 84 gemäß Fig. 8 und 9 und Fig. 4 und 5 sind relativ schmal und flach ausgebildet und weisen eine äußere Kante 108 im Bereich der Vertiefung 86 und der Rampe 96 auf. Die Erhebung 84 dient also dazu, auf das Saatgut eine zusätzliche Bewegung bzw. Beschleunigung auszuüben, wenn dieses sich in der Saatgutmasse 49 befindet, wobei dieser Vorgang durch die Rampe 96 unterstützt wird. Es wird darauf hingewiesen, daß in vorteilhafter Weise die Erhebung 84 sich etwas vor der Rampe 96 und dem zentralen Teil der Vertiefung 86 mit der Bohrung 90 befindet. Die Erhebung 84 weist einen ausreichenden Abstand von der Rampe 96 auf, um dadurch zu verhindern, daß Saatgutkörner bzw. Sonnenblumenkerne 60 zwischen der Erhebung 84 und der Rampe 96 eingeklemmt werden. Die relativ scharfe innere Kante 106 der Rampe 96 bewirkt, daß kein Saatgut zwischen die Kante 106 und die Erhebung 84 gelangt, sondern unterstützt, daß das Saatgut ohne weiteres um die Kante 106 herumgeleitet wird. Die geneigt verlaufende Kante 108 der Erhebung 84 verhindert, daß Saatgut zwischen die Erhebung 84 und die Rampe 96 gelangt oder sich an der Erhebung 84 festsetzt.

Wie bereits erwähnt, ist die tropfenförmig ausgebildete Saatgutzelle so ausgebildet und angeordnet, daß die vertikal verlaufende Innenseite 98 und das Ende der Vertiefung die Oberfläche 88 des Zellenrades 70 schneiden. Die Längsachse der Vertiefung 86 verläuft in Richtung des Kreisbogens 82. Jedoch tangiert die Längsachse der Vertiefung 86 nicht den Kreisbogen, sondern die Längsachse weist an ihrer Schnittstelle mit dem Kreisbogen einen Winkel zwischen 6 und 12$^{o}$ auf. Das Austragen des Saatkornes aus der Vertiefung erfolgt dann auch in Richtung des Austragrohres bzw. des Auslaufes 58. Auf diese Weise wird auch ein genauer Abstand zwischen der Ablage der einzelnen Saatkörner gewährleistet. Ferner wird dadurch sichergestellt, daß das
Saatgut von der nachfolgenden Rampe 96 wegbewegt wird, so
daß es nicht mit dieser kollidiert.

Die Vertiefung 86 ist etwas größer, jedoch nicht wesentlich größer als ein Sonnenblumenkern 60, so daß dadurch
sichergestellt ist, daß ein einzelner Sonnenblumenkern 60
ohne weiteres in der Vertiefung 86 aufgenommen werden kann,
ohne daß weitere Saatkörner in der Vertiefung mitaufgenommen werden. Der Durchmesser der Vertiefung muß etwas größer
sein als der Durchmesser oder die Breite des Sonnenblumenkernes 60. Die Tiefe der Vertiefung 86 ist vorzugsweise
gleich oder größer als der Durchmesser des Querschnittes
der Vertiefung. Dies unterstützt auch den Vorgang, ein einzelnes Saatkorn in der Vertiefung zu halten, ohne weitere
Saatkörner in derselben Vertiefung aufnehmen zu müssen.
Ferner wird dadurch sichergestellt, daß das einzelne Saatgut nicht zu früh aus der Vertiefung abgegeben wird.

Wie insbesondere aus den Figuren 10 und 7 hervorgeht, ist
durch die vorteilhafte Formgebung der Vertiefung eine einwandfreie Aufnahme des Saatgutes bzw. des Sonnenblumenkernes 60 gewährleistet. Aus den Abbildungen geht hervor, daß
die Saatgutzelle 80 groß genug ist, um einen einzelnen Sonnenblumenkern 60 aufnehmen zu können, ohne die Gefahr, diesen vorzeitig abgeben zu müssen. Ferner ist aus den Abbildungen ersichtlich, daß die Vertiefung bzw. die Saatgutzelle so groß ist, daß keine weiteren Saatkörner mitaufgenommen werden können. Weitere in der Vertiefung angesammelte
Saatkörner werden dann durch die Bewegung des Zellenrades
von der Saatgutzelle 80 wegbewegt, wenn die Saatgutzelle 80
sich aus der Saatgutmasse herausbewegt.

Untersuchungen haben auch ergeben, daß relativ lange, schmale Sonnenblumenkerne sich in der Saatgutzelle 80 aufrecht
stellen (siehe Fig. 11). Dabei sitzt der größere oder breitere Teil bzw. das Ende 62 des Sonnenblumenkernes auf dem Boden der Vertiefung 86 über der Öffnung 90. Natürlich ist es auch möglich, daß das gegenüberliegende Ende 64 des Sonnenblumenkernes 60 auf dem Boden der Vertiefung 86 aufsitzt. Durch die Unterstützung der nach oben gezogenen Innenseite 98 der Rampe 96 wird der Sonnenblumenkern 60 zusätzlich abgestützt. Ohne die Rampe 96 würde der Massenmittelpunkt des Sonnenblumenkernes 60 oberhalb der oberen Begrenzung der Saatgutzelle liegen, so daß dann der Sonnenblumenkern 60 aus der Saatgutzelle 80 herausgedrückt würde.

## Patentansprüche

1. Sämaschine, insbesondere pneumatische Einzelkornsämaschine, mit einem Zellenrad (28, 70), in dessen Oberfläche zahlreiche mit Abstand zueinander angeordnete Saatgutzellen (80) angeordnet sind, die auf einem Kreis angeordnet sind und die mit sich durch das Zellenrad erstreckenden Öffnungen (90) versehen sind, dadurch gekennzeichnet, daß auf der Oberfläche (88), auf der die Saatgutzellen (80) angeordnet sind, zahlreiche sich nach außen erstreckende Erhebungen auf einer Kreisbahn (82) angeordnet sind, wobei eine jede Erhebung sich bis in den Bereich einer Kante oder einer äußeren Begrenzung der Saatgutzelle (80) erstreckt.

2. Sämaschine nach Anspruch 1, dadurch gekennzeichnet, daß eine jede Saatgutzelle (80) eine Rückwand (94) aufweist, die ebenfalls auf der Kreisbahn (82) liegt, wobei eine jede Erhebung einen Teil aufweist, der die Rückwand über die Oberfläche (100) des Zellenrades (70) hinaus verlängert.

3. Sämaschine nach Anspruch 1 oder 2, dadurch gekennzeichnet, daß die Kreisbahn (82) einen Kreismittelpunkt (72) aufweist, der koaxial zur Drehachse des Zellenrades (70) verläuft, und die Rückwand (94) der Saatgutzelle (80) die durch das Zellenrad (70) sich erstreckende Öffnung (90) innerhalb der Saatgutzelle kreisförmig umgibt.

4. Sämaschine nach einem oder mehreren der vorherigen Ansprüche, dadurch gekennzeichnet, daß die auf der Oberfläche (88) des Zellenrades (70) vorgesehene Erhebung als Rampe (96) ausgebildet ist, die ab der höchsten durch die hervorstehende obere Kante der Innenseite (98) der Saatgutzelle gebildeten Stelle allmählich abnimmt und kontinuierlich in die Oberfläche (88) des Zellenrades (70) übergeht.

5. Sämaschine nach einem oder mehreren der vorherigen Ansprüche, dadurch gekennzeichnet, daß die Rampe (96), die Saatgutzellen (80) sowie die in den Saatgutzellen vorgesehenen Bohrungen bzw. Öffnungen (90) auf der Kreisbahn (82) angeordnet sind, die konzentrisch zur Drehachse des Zellenrades (70) verläuft.

6. Sämaschine nach einem oder mehreren der vorherigen Ansprüche, dadurch gekennzeichnet, daß die Rampe (96) mit Bezug auf die Oberfläche (88) des Zellenrades (70) mit Bezug auf den Längsschnitt der Rampe konkav ausgebildet ist.

7. Sämaschine nach einem oder mehreren der vorherigen Ansprüche, dadurch gekennzeichnet, daß eine jede Rampe (96) eine innenliegende Kante oder Seite (102), die auf einem Teil der Kreisbahn (82) verläuft, und eine außenliegende Kante oder Seite (104) aufweist, die ebenfalls auf einem Teil der Kreisbahn verläuft, wobei die außenliegende Kante oder Seite (104) mit Bezug auf die Oberfläche (88) des Zellenrades (70) geneigt verläuft, wobei die seitliche Ausdehnung der Rampe in etwa der seitlichen Ausdehnung der Saatgutzelle entsprechen kann.

8. Sämaschine nach einem oder mehreren der vorherigen Ansprüche, dadurch gekennzeichnet, daß neben den zahlreichen auf der ersten Kreisbahn (82) angeordneten Rampen (96) auf einer zweiten koaxial zur Drehachse des Zellenrades (70) ausgerichteten Kreisbahn ebenfalls zahlreiche Erhebungen (84) vorgesehen sind, die untereinander einen Abstand aufweisen.

9. Sämaschine nach einem oder mehreren der vorherigen Ansprüche, dadurch gekennzeichnet, daß die einzelnen Erhebungen (84) mit Bezug auf den Mittelpunkt (72) radial ausgerichtet sind und mittels einer innenliegenden und einer außenliegenden auf einer Kreisbahn verlaufenden Seite bzw. Kante (108) begrenzt werden, wobei die außenliegende Seite mit Bezug auf die Oberfläche (88) des Zellenrades geneigt verläuft.

10. Sämaschine nach einem oder mehreren der vorherigen Ansprüche, dadurch gekennzeichnet, daß die Rampe (96) mit ihrem einen oberhalb der Oberfläche (88) des Zellenrades (70) liegenden Ende einen Teil der Rückwand (94) der Saatgutzelle (80) bildet, wobei die innenliegende Kante (106) der Rückwand relativ dünn bzw. scharfkantig ausgebildet ist.

11. Sämaschine nach einem oder mehreren der vorherigen Ansprüche, dadurch gekennzeichnet, daß die Saatgutzelle (80) tropfenförmig ausgebildet ist und daß der im Querschnitt schmalere Teil der Saatgutzelle etwas radial nach außen gerichtet ist und mit Bezug auf die Oberfläche des Zellenrades (70) geneigt verläuft, während die Rückwand (94) in etwa rechtwinklig zur Oberfläche (88) des Zellenrades verläuft.

12. Sämaschine nach einem oder mehreren der vorherigen Ansprüche, dadurch gekennzeichnet, daß die durch die Saatgutzelle (80) verlaufende Längsmittelachse tangential an die äußere Kreisbahn (82) herangeführt ist und mit der Kreisbahn einen spitzen Winkel einschließt.

13. Sämaschine nach einem oder mehreren der vorherigen Ansprüche, dadurch gekennzeichnet, daß die Saatgutzelle im Bereich der tiefsten Stelle der Saatgutzelle (80) eine kreisbogenförmige Rückwand (94) aufweist, die in die kreisförmige Rückwand der Rampe (96) übergeht, wobei die Gesamthöhe der Rückwand (94) größer ist als die Tiefe der Saatgutzelle (80).

14. Sämaschine nach einem oder mehreren der vorherigen Ansprüche, dadurch gekennzeichnet, daß die höchste Stelle der Rampe (96) auf der gleichen Höhe wie die Rückwand (94) der Saatgutzelle (80) liegt und daß die Rampe von dieser Stelle aus allmählich abnimmt, bis sie in die Oberfläche (88) des Zellenrades (70) ausläuft.

15. Sämaschine nach einem oder mehreren der vorherigen Ansprüche, dadurch gekennzeichnet, daß die seitlichen Begrenzungen der Rampen (96) auf dem gleichen Kreisumfang wie die seitliche Begrenzung der Saatgutzelle (80) liegen.

1/4

Fig. 1

Fig. 2

Fig. 3

Fig. 4

Fig. 6

Fig. 7

Fig. 8

Fig. 9

Fig. 5

Fig. 10

Fig. 11